(19) Europäisches Patentamt
European Patent Office
Office européen des brevets

(11) Veröffentlichungsnummer: **0 562 368 A2**

(12) **EUROPÄISCHE PATENTANMELDUNG**

(21) Anmeldenummer: **93103881.4**

(51) Int. Cl.⁵: **C08G 65/28**, C08G 65/32

(22) Anmeldetag: **10.03.93**

(30) Priorität: **23.03.92 DE 4209386**

(43) Veröffentlichungstag der Anmeldung:
**29.09.93 Patentblatt 93/39**

(84) Benannte Vertragsstaaten:
**AT CH DE FR GB IT LI NL SE**

(71) Anmelder: **SIEMENS AKTIENGESELLSCHAFT**
**Wittelsbacherplatz 2**
**D-80312 München(DE)**

(72) Erfinder: **Feucht, Hans-Dieter, Dr. Dipl.-Chem.**
**Eschenweg 7**
**W-7253 Renningen 2(DE)**
Erfinder: **von Gentzkow, Wolfgang, Dr. Dipl.-Chem.**
**Zwetschgenweg 1**
**W-8524 Kleinsendelbach(DE)**
Erfinder: **Opolka, Heinz, Dipl.-Ing. (FH)**
**Lessingstrasse 9A**
**W-8400 Regensburg(DE)**

(54) **Epoxyfunktionelle Polyether.**

(57) Die Polyether nach der Erfindung sind epoxyfunktionelle Verbindungen der Struktur:

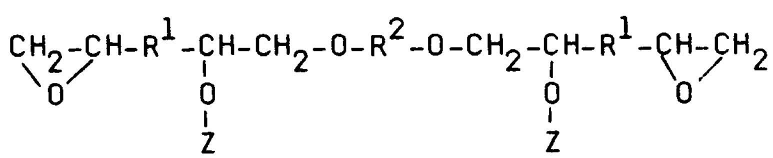

,

wobei Z eine Vernetzergruppe bedeutet.

**EP 0 562 368 A2**

Rank Xerox (UK) Business Services
(3.10/3.6/3.3.1)

Die Erfindung betrifft epoxyfunktionelle Polyether sowie deren Herstellung.

Polyether sind höhermolekulare Verbindungen mit zahlreichen Ethergruppen. Dazu gehören beispielsweise Polyoxymethylene sowie Polyethylen- und Polyphenylenoxide, insbesondere aber Polyetheralkohole (Polyalkylenglykole), d.h. hydroxylgruppenhaltige Polyether. Zu den hydroxylgruppenhaltigen, d.h. hydroxyfunktionellen Polyethern zählen beispielsweise auch die Polytetrahydrofurandiole.

Aufgrund der günstigen Eigenschaften, wie einstellbare Hydrophilie, hohe Hydrolysestabilität, gute mechanische Stabilität und - im allgemeinen - geringe oder fehlende Toxizität, besitzen Polyether ein breites Anwendungsspektrum. So werden sie als oberflächenaktive Stoffe, als Schmiermittel, als Hilfsstoffe in der kosmetischen und pharmazeutischen Industrie und als Kunststoffzwischenprodukte eingesetzt (siehe dazu: "Ullmanns Encyklopädie der technischen Chemie", 3. Auflage (1963), Bd. 14, Seiten 51 bis 53).

Polyetheralkohole, d.h. Polyether mit endständigen Hydroxylgruppen, können - als Diol- bzw. Polyolkomponente - zur Herstellung von Polyurethanen verwendet werden. Polyurethanelastomere mit einer derartigen Diol- bzw. Polyolkomponente besitzen hohe Reißfestigkeit bei gleichzeitig hoher Elastizität, wobei Einfriertemperaturen bis zu -50°C erreicht werden können. Auch Polyurethane werden vielseitig eingesetzt, beispielsweise als Konstruktionselemente im Fahrzeug- und Maschinenbau, als Kabelummantelungen, als Einbettungsmaterialien für elektrische Bauteile und - in Faserform - für Textilien. Da ausgehärtete Polyurethane biologisch völlig indifferent sind, können sie sogar bei Humanimplantaten Verwendung finden (siehe dazu: "Ullmanns Encyklopädie der technischen Chemie", 3. Auflage (1963), Bd. 14, Seiten 350 und 351).

Zur Herstellung von Beschichtungen für optische Fasern, d.h. Lichtwellenleiter, sind Beschichtungszusammensetzungen bekannt, welche ein hochmolekulares Polyether- oder Polyesteracrylat, ein spezielles flüssiges Organosilan oder -siloxan und einen Polymerisationsinitiator enthalten (JP-OS 63-233028 bzw. "Chemical Abstracts", Vol. 110 (1989), No. 100412u). Dabei kann ein acrylatterminiertes Polytetrahydrofuran zum Einsatz gelangen, das strahlenhärtbar ist.

Durch die Erfindung werden neue epoxyfunktionelle Polyether bereitgestellt. Dies sind Verbindungen folgender Struktur:

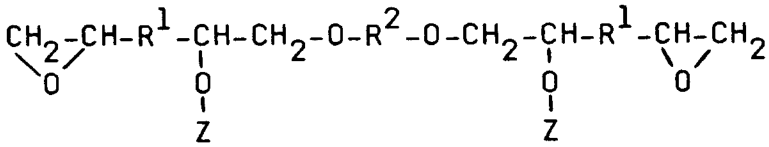 ,

wobei folgendes gilt:

Z =

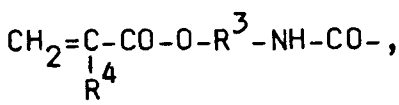 , 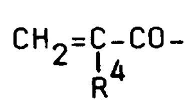 ,

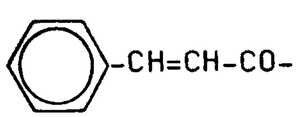 oder 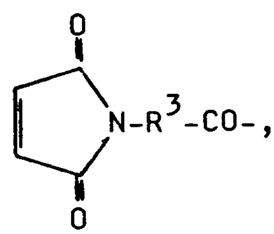 ,

wobei
$R^3 = -(CH_2)_m-$, mit m = 1 bis 10,
$R^4$ = H oder $CH_3$;

$R^1$ = $-(CH_2)_o-$, mit o = 0 bis 18,
$-CH_2-O-R^5-O-CH_2-$, wobei

$R^5$ = $-(CH_2)_p-$,

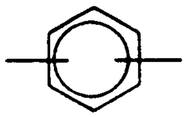 , 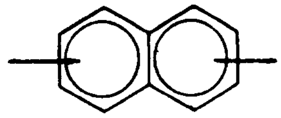 ,

$-[(CH_2)_q-O]_r-(CH_2)_q-$ , 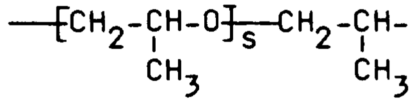 ,

$-(CH_2)_q-[O-(CH_2)_q]_t-O-Ar-O-[(CH_2)_q-O]_t-(CH_2)_q-$,

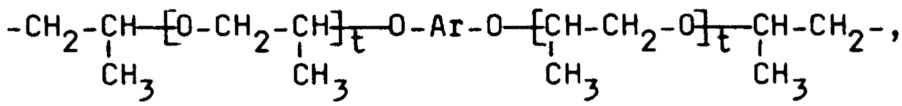 ,

mit
p = 2 bis 20, q = 2 bis 4, r = 1 bis 50,
s = 0 bis 50, t = 0 bis 25,

Ar =

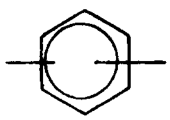 , 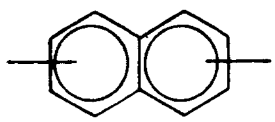 ,

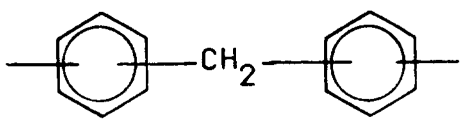 oder

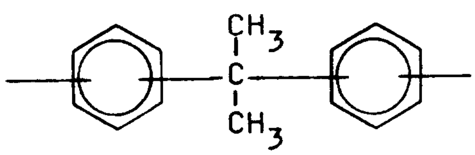 ,

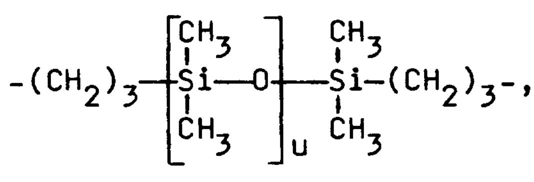 ,

mit u = 0 bis 150,

oder die entsprechende Gruppierung aus 3,4-Epoxycyclohexylmethyl-3',4'-epoxycyclohexancarboxylat, d.h. der Verbindung:

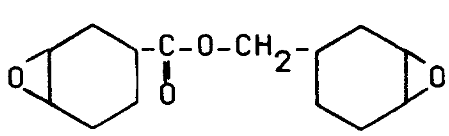 ;

$R^2$ = $-(CH_2-CH=CH-CH_2)_n-$, $-R^6-$, $-R^6-O-CO-R^7-CO-O-R^6-$ oder

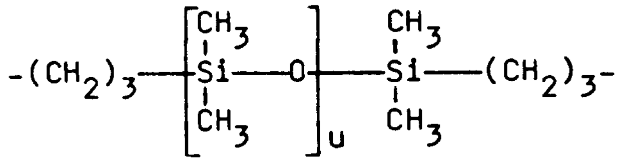 ,

wobei
n = 1 bis 50, u = 0 bis 150,
$R^6$ dieselbe Bedeutung hat wie $R^5$,
außer

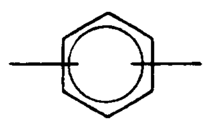 und 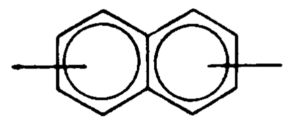 ,

und
$R^7$ folgendes bedeutet:
$-(CH_2)_v-$,

$$-(CH_2)_{q-1}-O-[(CH_2)_q-O]_s-(CH_2)_{q-1}-\ ,$$

$$-(CH_2)_{q-1}-[O-(CH_2)_q]_t-O-Ar-O-[(CH_2)_q-O]_t-(CH_2)_{q-1}-,$$

mit
q = 2 bis 4, s = 0 bis 50, t = 0 bis 25,
v = 0 bis 20, und
Ar die vorstehend angegebene Bedeutung hat.

Aus der EP-OS 0 321 821 ist ein flüssiges, strahlenhärtbares Harz zur Sekundärbeschichtung von Lichtwellenleitern bekannt. Dieses Harz ist ein Reaktionsprodukt von (Meth)acrylsäure oder Glycerin-di-(meth)acrylat bzw. Pentaerythrit-tri(meth)acrylat mit einem 2:1-Addukt aus einem Diepoxid und einem $\alpha,\omega$-Diol mit einem mittleren Molekulargewicht zwischen 600 und 3000 oder ein Reaktionsprodukt von (Meth)-acrylsäure bzw. -säurechlorid oder Isocyanatoalkyl-(meth)acrylat mit einem Umsetzungsprodukt aus dem 2:1-Addukt und einem niedermolekularen einwertigen Alkohol ($C_1$ bis $C_{10}$), einem niedermolekularen zweiwertigen Alkohol ($C_2$ bis $C_4$) oder Wasser; als Diepoxid bzw. $\alpha,\omega$-Diol dienen spezielle Verbindungen. In jedem Fall werden dabei die (endständigen) Epoxidgruppen der 2:1-Addukte zur Reaktion gebracht, d.h. es erfolgt eine Ringöffnung, und an die Hydroxylgruppen werden strahlenhärtbare Gruppen angekoppelt.

Die Polyether nach der Erfindung sind epoxyfunktionelle, radikalisch härtbare Polyetherharze; derartige Verbindungen sind bislang nicht bekannt. Diese Verbindungen weisen im gehärteten Zustand die günstigen Eigenschaften von Polyethern und - sofern sie Urethangruppierungen enthalten - auch die günstigen Eigenschaften von Polyurethanen auf. Aufgrund der vorhandenen Epoxidgruppen ist es darüber hinaus möglich, die gehärteten Harze noch zu modifizieren und damit die Eigenschaften zu variieren. Die Härtung der erfindungsgemäßen Polyetherharze erfolgt vorteilhaft durch Bestrahlung, da hierbei eine Strukturierung möglich ist; dabei gelangen schichtförmige Substrate zum Einsatz.

Die neuen epoxyfunktionellen Polyether werden in der Weise hergestellt, daß zunächst $\alpha,\omega$-Diepoxide der allgemeinen Formel

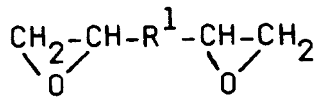

,

worin $R^1$ die vorstehend angegebene Bedeutung hat, mit $\alpha,\omega$-Diolen der allgemeinen Formel

$HO-R^2-OH$ ,

worin $R^2$ die vorstehend angegebene Bedeutung hat,
im Molverhältnis von 2:1 bei Temperaturen ≦ 70 °C in Gegenwart eines Katalysators zur Reaktion gebracht werden. Dabei entstehen hydroxylgruppenhaltige 2:1-Addukte folgender Struktur:

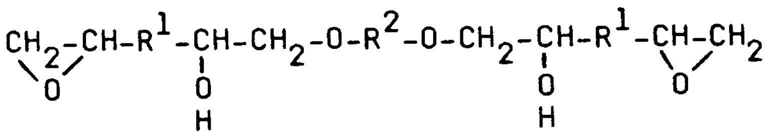

.

Zur härtbaren Einstellung der 2:1-Addukte werden deren OH-Gruppen mit radikalisch polymerisierbaren Vernetzergruppen umgesetzt, und zwar unter solchen Reaktionsbedingungen, daß die Epoxidgruppen erhalten bleiben, d.h. nicht verändert werden. Dabei entstehen epoxyfunktionelle Polyetherharze mit radikalisch härtbaren Vernetzergruppen. Zur Einführung der Vernetzergruppen dienen insbesondere folgende Verbindungen: Isocyanatoalkyl-(meth)acrylat, (Meth)acrylsäurechlorid bzw. -anhydrid, Zimtsäurechlorid und maleinimidgruppenhaltige Carbonsäurechloride.

Als $\alpha,\omega$-Diepoxide werden folgende Verbindungen eingesetzt:
- aliphatische Diepoxide;
- aliphatische, aromatische und aliphatisch/aromatische Diglycidylether, die in der Hauptkette Heteroatome, wie 0, enthalten können;
- cycloaliphatische Diepoxide, wie 3,4-Epoxycyclohexylmethyl-3',4'-epoxycyclohexancarboxylat;
- siliciumorganische Diepoxide.

Als $\alpha,\omega$-Diole dienen folgende Verbindungen:
- $\alpha,\omega$-Alkandiole;
- $\alpha,\omega$-hydroxyterminierte Polyether;
- $\alpha,\omega$-hydroxyterminierte Polyester;
- $\alpha,\omega$-hydroxyalkylterminierte Polysiloxane;
- $\alpha,\omega$-hydroxyterminiertes Polybutadien.

Die Umsetzung der Diole mit den Diepoxiden, die in einem inerten Lösungsmittel oder in Substanz durchgeführt wird, erfolgt im allgemeinen in Gegenwart einer starken organischen Säure, wie Trifluormethansulfonsäure, als Katalysator. Zu diesem Zweck kann beispielsweise aber auch eine Poly(perfluoralkylen)-sulfonsäure verwendet werden. Bei der nachfolgenden Umsetzung der hydroxylgruppenhaltigen 2:1-Addukte mit der die radikalisch vernetzbare Gruppe enthaltenden Verbindung wird ebenfalls ein Katalysator eingesetzt. Bei Isocyanaten ist dies eine Lewissäure, beispielsweise Dibutylzinndilaurat, bei Säureanhydriden kann zu diesem Zweck N-Methyl-imidazol dienen. Bei der Umsetzung mit Carbonsäurechloriden können organische Basen, wie Pyridin oder Chinolin, als Säureakzeptor und Katalysator verwendet werden.

Die auf diese Weise hergestellten epoxyfunktionellen Polyetherharze, die Doppelbindungen aufweisen, können nach üblichen Verfahren, wie Spin-, Roller- oder Curtain-Coating, Rakeln und elektrostatische Beschichtung, appliziert werden. Die Schichtdicke kann dabei durch Einstellung der Viskosität gesteuert werden, gegebenenfalls durch Zusatz von Lösemitteln oder Reaktivverdünnern. Die olefinisch ungesättigten, epoxidgruppenhaltigen Harze sind radikalisch härtbar, wobei die gehärteten Schichten noch Epoxidgruppen aufweisen. Die Harze können insbesondere nach Zusatz eines Photoinitiators UV-vernetzt bzw. strukturiert werden. Die Eigenschaften der gehärteten bzw. strukturierten Schichten, wie Vernetzungsdichte, Quellverhalten und Polarität, können über den Rest $R^1$ (der $\alpha,\omega$-Diepoxide) und über den Rest $R^2$ (der $\alpha,\omega$-Diole) im weiten Umfang variiert werden.

Über die vorhandenen Epoxidgruppen ist eine Modifizierung der Harze, d.h. eine Ankopplung von Funktionsträgern an die gehärteten bzw. strukturierten Schichten, leicht möglich. Die erfindungsgemäßen Polyether können dabei so modifiziert werden, daß sie als bioverträgliche Kunststoffe oder in Membranen für Biosensoren und Chemosensoren Verwendung finden.

Anhand von Ausführungsbeispielen soll die Erfindung noch näher erläutert werden.

Beispiele 1 bis 6

In einem 500 ml-Dreihalskolben (mit Rührer, Innenthermometer, Anschützaufsatz, Tropftrichter und Rückflußkühler mit Trockenrohr) werden 46 mmol $\alpha,\omega$-Diol (siehe dazu Tabelle 1) zusammen mit 50 g trockenem Chloroform (stabilisiert mit 2-Methyl-buten-2) vorgelegt und mit 20 Tropfen Trifluormethansulfonsäure versetzt. Dann wird die Apparatur mit Argon geflutet und der Kolbeninhalt auf 60 °C aufgeheizt. Bei dieser Temperatur werden innerhalb von ca. 30 min unter Rühren 92 mmol Diepoxid (siehe dazu Tabelle 1), gelöst in 100 g trockenem Chloroform, zugegeben.

Die Reaktion wird bis zu einem Restepoxidgehalt von 50 % weitergeführt (siehe dazu Tabelle 1). Nach Reaktionsende wird das Heizbad entfernt, dann werden - zur Neutralisation des Katalysators - 10 g vernetztes Poly-4-vinylpyridin zugegeben. Anschließend läßt man unter Rühren abkühlen. Nach 2stündigem Rühren wird das Poly-4-vinylpyridin durch Druckfiltration über ein 8 µm-Membranfilter entfernt; das Reaktionsprodukt bleibt zur Weiterverarbeitung in Lösung.

Nach dem Ausgleich aufarbeitungsbedingter Chloroformverluste wird die Harzlösung mit 20 Tropfen Dibutylzinndilauratlösung (10 g Dibutylzinndilaurat in 100 ml Chloroform) als Katalysator und mit je 200 mg Hydrochinon und 2,6-Di-tert.-butyl-4-methylphenol versetzt. Innerhalb von ca. 1 h werden dann unter Rühren 14,3 g Isocyanatoethylmethacrylat (92 mmol) zugetropft; hierbei darf die Innentemperatur 30 °C nicht überschreiten. Das Reaktionsgemisch wird bis zur vollständigen Umsetzung des Isocyanats bei Raumtemperatur weitergerührt, anschließend wird das Lösungsmittel bei Raumtemperatur entfernt, zunächst im Wasserstrahlvakuum und dann im Ölvakuum. Dabei wird ein klares, zähflüssiges Harz erhalten (siehe dazu Tabelle 1).

Beispiel 7

100 Gewichtsteile des radikalisch strahlenhärtbaren bzw. strukturierbaren, epoxyfunktionellen Harzes nach Beispiel 1 werden mit 7 Gewichtsteilen des handelsüblichen Reaktivverdünners Oligotriacrylat und mit 2 Gewichtsteilen des handelsüblichen Photoinitiators 2-Hydroxy-2-methyl-1-phenyl-propan-1-on versetzt und gründlich vermischt. Aus der Mischung wird eine ca. 100 µm dicke Harzschicht gegossen, die unter Stickstoff in einer kommerziellen UV-Bestrahlungsanlage 3,2 s bestrahlt wird. Es wird eine klare, farblose, nichtklebrig-gehärtete Folie mit einem Epoxidgehalt von 90 mmol/100 g erhalten.

Tabelle 1

| Beispiel | α,ω-Diol | α,ω-Diepoxid | Reaktionszeit (50 % Restepoxid) | Ausbeute | Epoxidgehalt mmol/100 g |
|---|---|---|---|---|---|
| 1 | 1,4-Butandiol (4,1 g) | PTHF-Diglycidylether*) (80 g) | 14 h | 85 g (85 %) | 92 |
| 2 | 1,6-Hexandiol (5,4 g) | " | 14 h | 85 g (85 %) | 90 |
| 3 | Polytetrahydrofuran-250 (11,5 g) | " | 12 h | 87 g (82 %) | 85 |
| 4 | THF/EO-Copolyetherglykol**) (57,5 g) | " | 15 h | 21 g (80 %) | 59 |
| 5 | Polytetrahydrofuran-250 (11,5 g) | 1,2,7,8-Diepoxyoctan (13,1 g) | 10 h | 33 g (85 %) | 232 |
| 6 | 1,4-Butandiol (4,1 g) | α,ω-Diglycidoxypropylpolydimethyldisiloxan (87,5 g) | 15 h | 85 g (80 %) | 85 |

*) Polytetrahydrofurandiglycidylether ($M_n$ = 870 g/mol)
**) Tetrahydrofuran/Ethylenoxid-Copolyetherglykol

## Patentansprüche

1. Epoxyfunktionelle Polyether der Struktur:

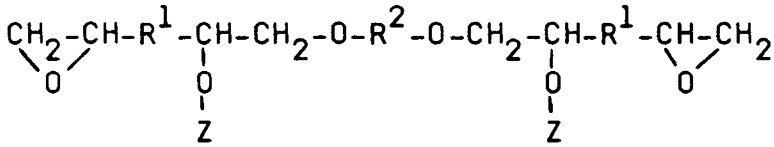 ,

wobei folgendes gilt:

Z =

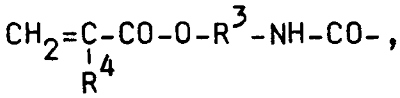 , 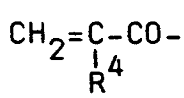 ,

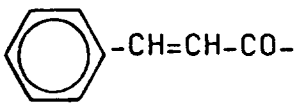 oder 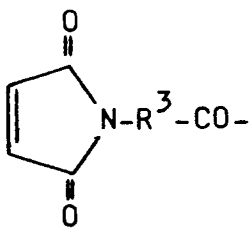 ,

wobei

$R^3$ = $-(CH_2)_m-$, mit m = 1 bis 10,

$R^4$ = H oder $CH_3$;

$R^1$ = $-(CH_2)_o-$, mit o = 0 bis 18,

$-CH_2-O-R^5-O-CH_2-$,

wobei

$R^5$ = $-(CH_2)_p-$,

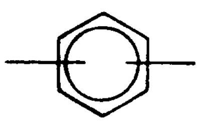 , 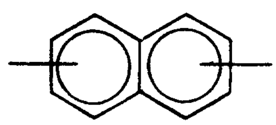 ,

$-[(CH_2)_q-O]_r-(CH_2)_q-$ , 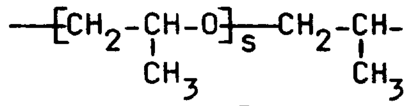 ,

$-(CH_2)_q-[O-(CH_2)_q]_t-O-Ar-O-[(CH_2)_q-O]_t-(CH_2)_q-$,

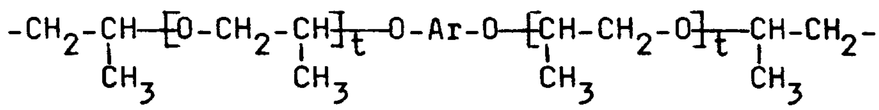 ,

mit

p = 2 bis 20, q = 2 bis 4, r = 1 bis 50,

s = 0 bis 50, t = 0 bis 25,

Ar =

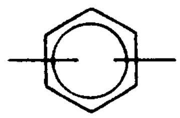 , 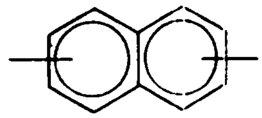 ,

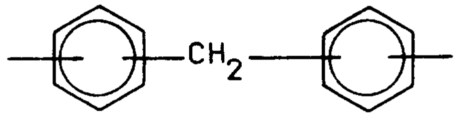 oder

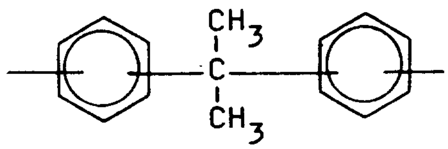 ,

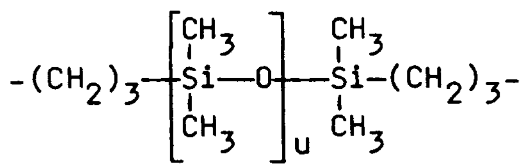 ,

mit u = 0 bis 150,

oder die entsprechende Gruppierung aus 3,4-Epoxycyclohexylmethyl-3',4'-epoxycyclohexancarboxylat;

$R^2$ = $-(CH_2-CH=CH-CH_2)_n-$ , $-R^6-$ , $-R^6-O-CO-R^7-CO-O-R^6-$ oder

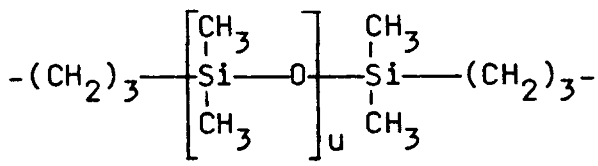 ,

wobei

n = 1 bis 50, u = 0 bis 150,

$R^6$ dieselbe Bedeutung hat wie $R^5$,

außer

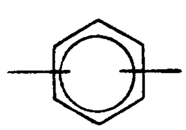 und 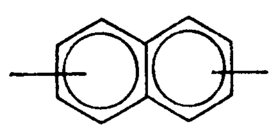 ,

und

$R^7$ folgendes bedeutet:

$-(CH_2)_v-$,

$$-(CH_2)_{q-1}-O-[(CH_2)_q-O]_s-(CH_2)_{q-1}- ,$$

$$-(CH_2)_{q-1}-[O-(CH_2)_q]_t-O-Ar-O-[(CH_2)_q-O]_t-(CH_2)_{q-1}- ,$$

mit
q = 2 bis 4, s = 0 bis 50, t = 0 bis 25,
v = 0 bis 20, und
Ar die vorstehend angegebene Bedeutung hat.

**2.** Verfahren zur Herstellung epoxyfunktioneller Polyether gemäß Anspruch 1, **dadurch gekennzeichnet,** daß $\alpha,\omega$-Diepoxide der allgemeinen Formel

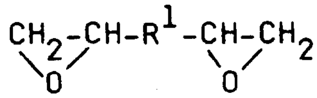 ,

worin $R^1$ die im Anspruch 1 angegebene Bedeutung hat, mit $\alpha,\omega$-Diolen der allgemeinen Formel

$HO-R^2-OH$ ,

worin $R^2$ die im Anspruch 1 angegebene Bedeutung hat, im Molverhältnis von 2:1 bei Temperaturen $\leqq$ 70 °C in Gegenwart eines Katalysators zur Reaktion gebracht werden, und daß die dabei gebildeten hydroxylgruppenhaltigen 2:1-Addukte in Gegenwart eines Katalysators mit einer stöchiometrischen Menge, in Bezug auf die OH-Gruppen, einer zur Einführung des Restes Z geeigneten Verbindung, wobei Z die im Anspruch 1 angegebene Bedeutung hat, umgesetzt werden.

**3.** Verfahren nach Anspruch 2, **dadurch gekennzeichnet,** daß die 2:1-Addukte mit einer der folgenden Verbindungen umgesetzt werden: Isocyanatoalkyl-(meth)acrylat, (Meth)acrylsäurechlorid bzw. -anhydrid, Zimtsäurechlorid und maleinimidgruppenhaltige Carbonsäurechloride.